(19) **Europäisches Patentamt European Patent Office Office européen des brevets**

(11) **EP 4 252 470 B1**

(12) **EUROPEAN PATENT SPECIFICATION**

(45) Date of publication and mention
of the grant of the patent:
**15.04.2026 Bulletin 2026/16**

(21) Application number: **20963786.7**

(22) Date of filing: **24.11.2020**

(51) International Patent Classification (IPC):
*H04W 4/44* (2018.01)   *H04W 24/04* (2009.01)
*H04L 41/16* (2022.01)   *G06N 3/0442* (2023.01)
*G06N 3/09* (2023.01)    *G06N 3/094* (2023.01)
*G06N 3/08* (2023.01)    *H04W 24/02* (2009.01)

(52) Cooperative Patent Classification (CPC):
**H04W 24/04; G06N 3/0442; G06N 3/09;
G06N 3/094; H04L 41/16; H04W 4/44;** G06N 3/044;
G06N 3/08; H04W 24/02

(86) International application number:
**PCT/SE2020/051113**

(87) International publication number:
**WO 2022/115009 (02.06.2022 Gazette 2022/22)**

(54) **NETWORK PARAMETER FOR CELLULAR NETWORK BASED ON SAFETY**

NETZWERKPARAMETER FÜR EIN ZELLULARES NETZWERK AUF SICHERHEITSBASIS

PARAMÈTRE DE RÉSEAU POUR RÉSEAU CELLULAIRE BASÉ SUR LA SÉCURITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.10.2023 Bulletin 2023/40**

(73) Proprietor: **Telefonaktiebolaget LM Ericsson
(publ)
164 83 Stockholm (SE)**

(72) Inventors:
 • **HATA, Alberto**
  **13015-320 Campinas, SP (BR)**
 • **INAM, Rafia**
  **724 70 Västerås (SE)**
 • **MARQUEZINI, Maria Valéria**
  **13330-340 Indaiatuba (BR)**
 • **VISMARI, Lucio**
  **05588-000 São Paulo, SP (BR)**
 • **NASCIMENTO, Alexandre**
  **12210 São José dos Campos, SP (BR)**
 • **MOLINA, Caroline**
  **01529-001 São Paulo, SP (BR)**
 • **CAMARGO JR, João Batista**
  **05640-00 Sao Paolo (BR)**
 • **RADY, Jorge**
  **05011-040 São Paolo (BR)**
 • **CUGNASCA, Paulo**
  **5315-030 São Paulo, SP (BR)**

(74) Representative: **Zacco Sweden AB
P.O. Box 5581
Löjtnantsgatan 21
114 85 Stockholm (SE)**

(56) References cited:
EP-A1- 3 745 772      WO-A1-2012/072445
WO-A1-2019/094843    WO-A1-2019/158034
WO-A1-2020/049181    WO-A1-2020/121045
US-A1- 2017 332 282   US-A1- 2019 053 104
US-A1- 2020 059 551   US-B1- 10 812 992

EP 4 252 470 B1

**Description**

TECHNICAL FIELD

The present disclosure relates generally to methods for determining a value for a network parameter for a cellular network and apparatuses.

BACKGROUND

Enabling mobile devices (e.g., mobile robots) to operate in higher levels of automation requires capability of processing more data, taking complex decisions in real time and having an accurate representation of the surrounding environment. In particular, when such devices have direct or indirect interaction with humans, safety can become a key property that influences the whole automation process. For instance, industrial robots that interact with humans must attend a set of safety requirements to avoid accidents (See e.g., ISO/TS 15066:2016. Robots and robotic devices - Collaborative robot). In another example, autonomous vehicles that interact with humans must attend a set of safety requirements to avoid accidents (see e.g., ISO/PAS 21448:2019. Road vehicles - Safety of the intended functionality).

US 2019/053104 A1 discloses network slicing used to provide services for a wireless device. A network slice is determined for the wireless device based on a required bandwidth for the network slice and/or charging information for the network slice.

WO 2019/158034 A1 discloses a resource allocation method and apparatus, which relate to the field of communications, and can ensure the service quality of a service.

US 2017/332282 A1 discloses a channel type used to support user QoE expectations, which is, in particular, a QoS and QoE guaranteed channel (QQGC).

WO 2020/049181 A1 discloses a method for allocating network resource based on gradient mapping between network resource allocation parameter and user QoE based on QoS tolerance, network resource allocation state in the entire network, slice priority, current and target user QoE.

SUMMARY

The invention is defined by the independent claims. Furthermore, the embodiments of the invention are those defined by the claims. Moreover, examples and embodiments, which are not covered by the claims are presented not as embodiments of the invention, but as background art or examples useful for understanding the invention.

Cellular network requirements to enable autonomous operation of mobile devices demands allocation of a considerable amount of network resources. In some approaches, as the network infrastructure is not aware of the current state of a mobile device, a fixed network requirement (also referred to herein as a network parameter) with over specified values can be adopted. An object of the invention is to provide a flexible network parameter determined according to a safety level (or risk level) of a mobile device. The determined network parameter may be signaled to a core network node for a resource allocation in the network that fulfils the network parameter.

In various embodiments, operations of a method performed by a first network node in a communication network is provided. The method includes determining, from a machine learning model at the first network node, a value for a network parameter for a cellular network for operation of a communication device based on a set of observations of the communication device, a safety level of the communication device, and a key performance indicator, KPI, of the cellular network. The method further includes signaling the value of the network parameter to a core network node in the cellular network for a resource allocation of the cellular network.

In some embodiments, further operations include collecting a plurality of sets of observations, safety levels, and KPIs into an aggregated dataset from at least one communication device. The aggregated dataset is organized according to a timestamp indicating a collection time for each set in the plurality of sets of observations, a safety levels, and KPIs. The operations further include training the machine learning model from the aggregated dataset to predict a maximum value for the network parameter from inputs to the machine learning model. The inputs include an observation from the set of observations, the safety level of the communication device corresponding to the observation, and the KPI. The operations further include predicting the value for the network parameter from the machine learning model based on the input to the machine learning model including the set of observations and the set of safety levels corresponding to the set of observations having a time greater than the collection time. The set of observations are a set of sensor measurements of the at least one communication device. The machine learning model comprises a time series prediction machine learning model.

In some embodiments, further operations include performing an evaluation of a plurality of device observations from a device dataset from another communication device based on exploration of the plurality of device observations for unsafe situations. The operations further include determining a value for a corresponding KPI for a device observation of a safety level for an unsafe situation to obtain a new device dataset comprising the device observation of the safety level for the unsafe situation and a corresponding upper bound value of the network parameter. The operations further include adding the new device dataset to the aggregated dataset for training of the machine learning model.

In other embodiments, operations of a method performed by a core network node in a cellular network is provided. The method includes receiving, from a first network node in a communication network, a value for a network parameter for the cellular network. The operations further include signaling, to a network node in the cellular network, a resource allocation for configuration of the cellular network for communications, via the cellular network, between a communication device in the cellular network and a second network node in the communication network. The resource allocation is based on the value of the network parameter.

Corresponding embodiments of inventive concepts for a first network node, a core network node, computer program products, and computer programs are also provided.

Potential advantages provided by various embodiments of the present disclosure may include a more efficient or improved network resource allocation, while keeping the mobile device operating autonomously in a safe manner including, e.g., allocation of an appropriate amount of resources via a robust machine learning model for critical events.

BRIEF DESCRIPTION OF DRAWINGS

The accompanying drawings, which are included to provide a further understanding of the disclosure and are incorporated in and constitute a part of this application, illustrate certain non-limiting embodiments of inventive concepts. In the drawings:

Figure 1 is a schematic illustrating an example embodiment of a method in accordance with various embodiments of the present disclosure;

Figure 2 is a schematic of an example embodiment of a first network node in accordance with various embodiments of the present disclosure;

Figure 3 is a schematic diagram illustrating an example embodiment of a failure search operation of a method in accordance with some embodiments of the present disclosure;

Figure 4 is another schematic diagram illustrating an example embodiment of a failure search operation of a method in accordance with some embodiments of the present disclosure;

Figure 5 is a schematic illustrating an example embodiment of a method in accordance with various embodiments of the present disclosure;

Figure 6 is a block diagram of a communication device in accordance with some embodiments of the present disclosure;

Figure 7 is a block diagram of a network node in accordance with some embodiments of the present disclosure;

Figure 8 is a block diagram of a core network node in accordance with some embodiments of the present disclosure;

Figures 9 and 10 are flow charts of operations of a first network node according to various embodiments of the present disclosure; and

Figure 11 is a flow chart of operations of a core network node in accordance with some embodiments of the present disclosure.

DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter.

For simplicity, safety requirements are usually denoted by a numeric value that can be referred to as a safety level or risk level. Mobile devices that have higher interaction with humans may require higher safety levels (or lower risk levels).

The following explanation of potential problems with some approaches is a present realization as part of the present disclosure and is not to be construed as previously known by others.

Cellular network requirements to enable autonomous operation of mobile devices demands allocation of a considerable amount of network resources. In some approaches, as the network infrastructure is not aware of the current state of a mobile device, a fixed network requirement with over specified values is usually adopted. Various embodiments of the present disclosure use a machine learning (ML) model to incorporate mobile device observations and safety level values to determine a more realistic network requirement. As a consequence, the method of various embodiments of the present disclosure may lead to a more efficient network resource allocation, while keeping the mobile device operating autonomously in a safe manner.

Offloading a mobile device's tasks in the cloud or edge is an approach to achieve higher safety levels (see e.g., Chen, Wuhui, et al. "A Study of Robotic Cooperation in Cloud Robotics: Architecture and Challenges". IEEE Access, vol. 6, 2018, p. 36662-82. IEEE Xplore, doi:10.1109/ACCESS.2018.2852295). Cloud or edge processing may make it possible to run complex algorithms that would not run in a mobile device due to hardware limitations. Through remote processing, such algorithms can use data from a multitude of sensors, get knowledge from other mobile devices and use an accurate representation of the environment. Software that is vital to mobile device is referred to herein as a mission-critical application or a critical application.

A communication network needs to fulfill specific requirements to have a proper communication between a mobile device and a remote node (e.g., an edge/cloud node). Otherwise, poor network communication may lead to a severe impact in the safety. These requirements are usually defined by standard organizations. As an example, ETSI Technical Specification (TS) 22.186 V15.3.0 (2018-07), Service requirements for enhanced V2X scenarios, specifies 5th generation (5G) communication requirements for different vehicle-to-everything (V2X) scenarios. ETSI TS 22.186 V15.3.0 establishes a maximum end-to-end (E2E) latency of 3 ms, a minimum message transmission (TX) rate of 100 Hz (msg/s) and a minimum reliability of 0.9999. When a network infrastructure cannot fulfil these requirements, the network is considered unable to provide communication services.

The communication network may comprise and/or interface with any type of communication, telecommunication, data, cellular, and/or radio network or other similar type of system. In some embodiments, the communication network may be configured to operate according to specific standards or other types of predefined rules or procedures. Thus, particular embodiments of the communication network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

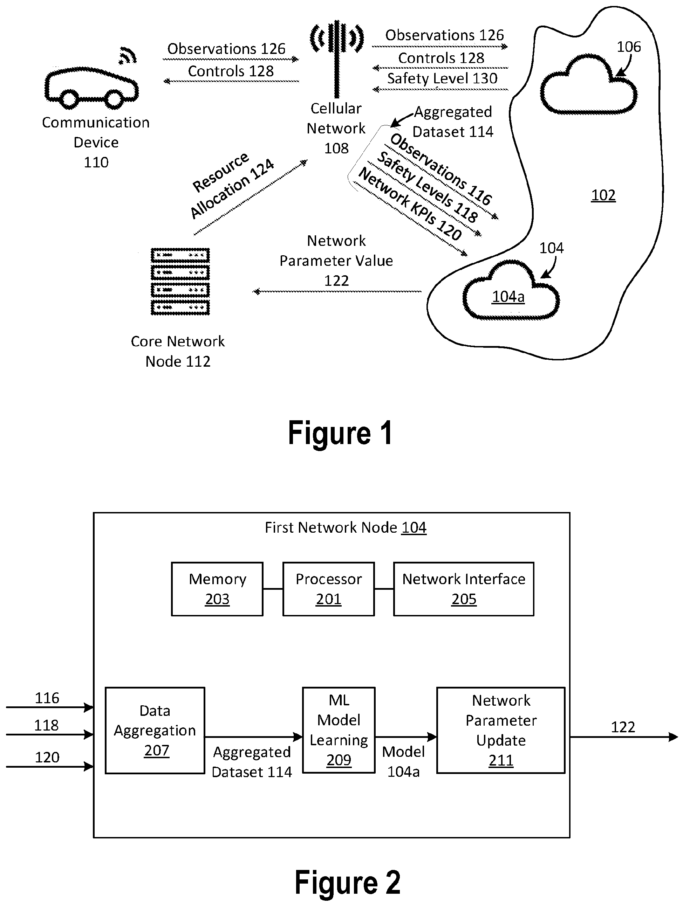

The communication network of Figure 1 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, cloud-based networks, edge-based networks, and other networks to enable communication between devices.

However, the established requirements might not be realistic for all scenarios and a relaxed requirement may still enable the safe operation of mobile devices. For example, a latency of 1 ms may be specified for precise cooperative robotic motion control. However, depending on how a human is collaborating with the robot, such a low latency may not be required and could be relaxed to a relaxed requirement of 3 ms and still enable safe operation of the robot.

Some approaches to address communication requirements to enable safe operation of mobile devices that rely on cellular networks to remotely run critical applications may have the following limitations:

- Communication requirements may not be properly defined by the standard organizations. Requirements may be defined for a specific application scenario and may not cover different situations that the application can undergo in a scenario.
- Communication requirements for safety-critical scenarios can be very rigorous and demand a significant resource allocation. Consequently, there may be situations where the network infrastructure cannot provide communication services due to lack of resources. Alternatively, there may be cases where the network resources are underused as the requirements are over specified. Large resource allocation also may have a high associated cost (e.g., energy, budget, etc.).
- Communication requirements may be static and not calculated from parameters that are external to the network. Network requirements might be defined from application level properties, such as safety. For example, mobile devices may face a period of time with few or no nearby obstacles, which would permit slower reactions. In this situation, latency requirements could be relaxed.

Various embodiments of the present disclosure may provide solutions to these and other potential problems. In various embodiments, a method is provided that enables the cellular infrastructure to have a flexible communication requirement (also referred to herein as a "network requirement", "network communication requirement", or a "network parameter") that may be defined according to the safety level (or risk level) of a mobile device (also referred to herein as a "communication device"). As used herein, the terms "network parameter", "network requirement", "network communication requirement", and "communication requirement" may be used interchangeably. A network parameter(s) (e.g. maximum latency) may be calculated from a set of observations (e.g. sensor measurements) and a safety level of the mobile device. The method uses a ML model to determine a value for optimal or improved network parameter(s) given a historic value of the safety level(s) and observation(s). In some embodiments, targeted to critical scenarios, the method can automatically incorporate rare catastrophic examples in a training dataset for model robustness.

In the method of various embodiments, from the determined network parameter(s), network resources may be reallocated by provisioning a network topology or a network slice that fulfils the network parameter(s). As a consequence, the network may allocate just the necessary or appropriate resources needed for the safety of the mobile device.

As a consequence, a potential advantage provided by various embodiments of the present disclosure may include dynamically determining appropriate network requirements based on a safety level(s) which may alleviate network infrastructure and may prevent unnecessary network resource allocation.

Another potential advantage provided by various embodiments of the present disclosure may include automatic adjustment of network parameter(s). Network parameter(s) may be determined automatically without human supervision. The system of various embodiments may learn an ML model without human supervision and may update the ML model as more data is obtained.

Another potential advantage provided by various embodiments of the present disclosure may be optimal or improved usage of network resources. The method of various embodiments may result in the allocation of an appropriate amount of resources needed in a critical scenario. Networks with over specified requirements may have the unused resources released. Some of the effects of the resource reallocation may include increase of network capacity, reduction of energy consumption, and reduction of costs.

Yet another potential advantage provided by various embodiments of the present disclosure may be ML model robustness for critical events. Training ML models for critical applications requires a training dataset that encompasses all situations, mainly situations associated to highly unsafe events. Many times, however, this dataset is not available or is very costly to obtain. The method of various embodiments of the present disclosure may automatically explore for training examples that represent high risk situations. The exploration can make use of data gathered by other mobile devices to induce diversity. In addition, variability of critical examples is checked by evaluating a level of uncertainty.

Mobile devices that have some level of interaction with humans must be designed to ensure safety during autonomous operation. In various embodiments of the present disclosure, safety represents a current state of the mobile device, which can be calculated from observations made by mobile device. Observations include environment information collected from sensor measurements (e.g. camera, lidar, odometer, etc.).

In various embodiments of the present disclosure, a safety level is obtained from a function $S_i(O_i) \in [0,1]$, where $O_i$ represents a set of observations at instant $i$. Observations taken from situations with high safety generate $S_i$ values close to 1. Action $A_i$ that leads to the accomplishment of a certain task, given the safety level $S_i$, is determined by the function $\pi_i$ $(A_i, S_i)$.

In various embodiments, computation of $S_i$ and $\pi_i$ are performed outside the mobile device in a remote network node that uses edge/cloud infrastructure. As a consequence, observations from other mobile devices may be combined to calculate a safety level. In such embodiments, each mobile device may transmit $O_i$ to the remote node through a cellular network. The collection of algorithms running on such a network node is referred to herein as a critical application.

In some embodiments, the cellular network service is configured to communicate by following a requirement set $R = \{r_j\}_{j=1}^{n}$, where $n$ is the number of requirements. In some embodiments, the requirement set is defined as follows:

$$R = \begin{cases} r_1 : p_1 \leq l_1 \\ r_2 : p_2 \leq l_2 \\ \quad \vdots \\ r_n : p_n \leq l_n \end{cases},$$

where $P_i = \{p_j\}_{j=1}^{n}$ represents network parameters such as latency, message transmission frequency, and throughput. The set $L_j = \{l_j\}_{j=1}^{n}$, $l_j \in \mathcal{R}$ denotes upper bound limit values of the network parameters.

In some embodiments, a set of network performance key performance indicators (KPI) related to the network parameters $P_i$ is given by $E_i = \{e_{i,j}\}_{j=1}^{n}$ at instant $i$. In some embodiments, a network is considered apt to provide service if the condition $e_{i,j} \leq l_j$ is satisfied.

In an example embodiment, another network node in a cloud-based or an edge-based network hosts an application based on a ML model. The ML model may include, without limitation, a MIC4Safe (Machine Intelligence on Communication for Safety) model. This example embodiment relies on a cellular network to communicate with a mobile device and a network node in the cloud-based or edge-based network for a critical application (referred to herein as a critical application node). In example embodiments, the ML model (e.g., MIC4Safe) is supported by three components to determine optimal or improved values for $L_j$:

(1) Data aggregation: Continuously collects $\{O_i, S_i, E_i\}$ from a mobile device, the critical application node and network infrastructure, respectively. This data is incrementally added in a dataset, which is organized according to a timestamp. This dataset is denoted as $D_k = \{O_k, S_k, E_k\}_{k=1}^i$.

(2) Model learning: The ML model is trained from the dataset $D_k$ to predict network parameter values E given the input $\{O, S\}$. A ML model for time series prediction is used in this operation (e.g. Long-shot term memory, Recurrent Neural Network) to incorporate temporal analysis. This ML model is denoted as $f(O, S)$. As each mobile device might have particular differences (e.g. different sensor calibration, robot model, etc.), and a distinct dataset, therefore, a distinct model is trained for each device. To ensure the robustness of ML model $f(O, S)$, e.g. the ML model will not output incorrect E values that would lead to catastrophic situations, adversarial evaluation is performed (as discussed further below).

(3) Network Parameter update: A new set of network parameter values is predicted through the learned ML model $f(O, S)$. In addition, a new set of observations and safety values $\{O_t, S_t\}$ are used, where $t > i$, is used as input to the ML model. The updated set of network parameter values is given by $L'_j = f(O_t, S_t)$.

In an example embodiment, the new set of network parameters $L'_j$ is used to reconfigure the network. Methods for resource reallocation, such as provisioning of network topology and network slice can be applied. Although the MIC4Safe is continuously running, the network reconfiguration can be triggered according to a predefined rule.

Subsequently, network parameters of the cellular network are expected to satisfy $e_{i,j} \leq l'_j$ to produce safety levels according to distribution $\{St\}$, while the mobile device is executing some task.

Figure 1 is a schematic illustrating an example embodiment of a method in accordance with various embodiments of the present disclosure. A cellular network (illustrated by base station 108) provides communication services to communication device 110 and to critical application node 106 and a first network node 104 (e.g., a MIC4Safe node) in communication network 102. Communication network 102 includes a cloud-based or an edge-based network. Observations (e.g., sensor measurements) 126 obtained from communication device 110 are sent to critical application node 106. Critical application node 106 calculates a current safety level 130 and from the calculated current safety level 130, determines communication device controls 128. ML model 104a at first network node 104 determines an optimal or improved network parameter value(s) 122 from an observation(s) 116, the safety level(s) 118, and network KPIs 120. The cellular network (illustrated by core network node 112) reallocates resources 124 based on the updated network parameter(s) value(s) 122.

Figure 2 is a schematic of an example embodiment of a first network node 104 (e.g., a MIC4Safe node) in accordance with various embodiments of the present disclosure. First network node 104 includes memory circuitry 203, processing circuitry 201, network interface 205, data aggregation module 207, ML model learning module 209 and network parameter update module 211. In an example embodiment, data aggregation module 207 collects a time series of observations 116, safety levels 118 and network KPIs 120 to generate an aggregated training dataset 114. ML model learning module 209 trains a ML model to predict optimal or improved network parameters 122 from the observations 116, safety levels 118, and/or network KPIs 120. Network parameters update module 211 includes model inference and obtains the new set of network parameter values 122.

ML model robustness from failure exploration is now discussed.

As discussed above, in some embodiments, the ML model $f(O,S)$ is trained on dataset $D$. Therefore, the outputs of the ML model will be generated according to the data distribution of $D$. Ideally, in some embodiments for critical applications, $D$ should contain all possible situations that a mobile device will encounter to help avoid ML model $f(O,S)$ generating incorrect outputs that could lead to catastrophic situations. However, it is not always feasible to obtain such a dataset, e.g. due to complexity of the scenario and cost limitations. In addition, as highly unsafe situations may occur rarely, it is possible to obtain only a few examples, which can lead to an unbalanced dataset.

When multiple mobile devices 110 are involved, the dataset obtained by each mobile device 110 could be simply combined to generate a more complete training dataset. However, as each device 110 may have distinct physical properties (e.g. usage of a specific sensor, having a certain actuator calibration, etc.), training examples of a particular device 110 might not be applicable for another device 110.

Alternatively, in accordance with some embodiments of the present disclosure, the robustness of the trained ML model 104a may be guaranteed or improved by automatically exploring unforeseen risky situations that were not covered in the training dataset. In an example embodiment, a training dataset is searched for inputs p = $\{O,S|S \approx 0\}$, which correspond to highly unsafe observations (also referred to herein as failures). In general, these scenarios may be difficult to obtain manually as they may happen very sporadically.

Adversarial evaluation (AE) is a machine learning technique that explores a model's input domain space for values associated to unprecedent failures (see e.g., Uesato, Jonathan, et al. "Rigorous Agent Evaluation: An Adversarial Approach to Uncover Catastrophic Failures". arXiv:1812.01647 [cs, stat], December, 2018. arXiv.org, http://arxiv.org/abs/1812.01647). Obtained input values are then appended in the training dataset. The process of searching for a failure in AE can be made in different manners (e.g. random exploration, Monte Carlo simulation), but all of them depend on a relevant starting point. A poor starting point may affect efficiency of the failure search or may even result in not finding an unforeseen situation. Moreover, just finding many failure examples are possible is not enough but more importantly, exploring a variety of failure situations.

In some embodiments of the present disclosure, the limitations of AE may be addressed by including a method to efficiently explore a variety of unforeseen failure situations combined with the detection of novel situations. In some embodiments, detected situations are incorporated in an existing training dataset $D_d$ of the mobile device $d$. As a consequence, some embodiments of the present disclosure may provide the following:

- In general, AE strategies obtain the starting points for exploration from simulations or directly from a unique training dataset. In contrast, some embodiments of the present disclosure, make use of the observations made by other devices 110 as potential starting points to induce heterogeneity in the explorations. Essentially, when training a ML model $f(O,S)$ for a device d, it uses starting points $P \in \delta$, where $\delta = \{o | o \in \{O_n\}, n \neq d\}$ and $\{O_d\}$ is the set of observation made by a device $d$.

- Some embodiments of the present disclosure verify whether the failure examples resulted from explorations are novel through mutual information analysis. This may ensure diversity in failure situations and may make the final training dataset smaller and faster to train.

- In some embodiments of the present disclosure, a process for ML model robustness is fully unsupervised.

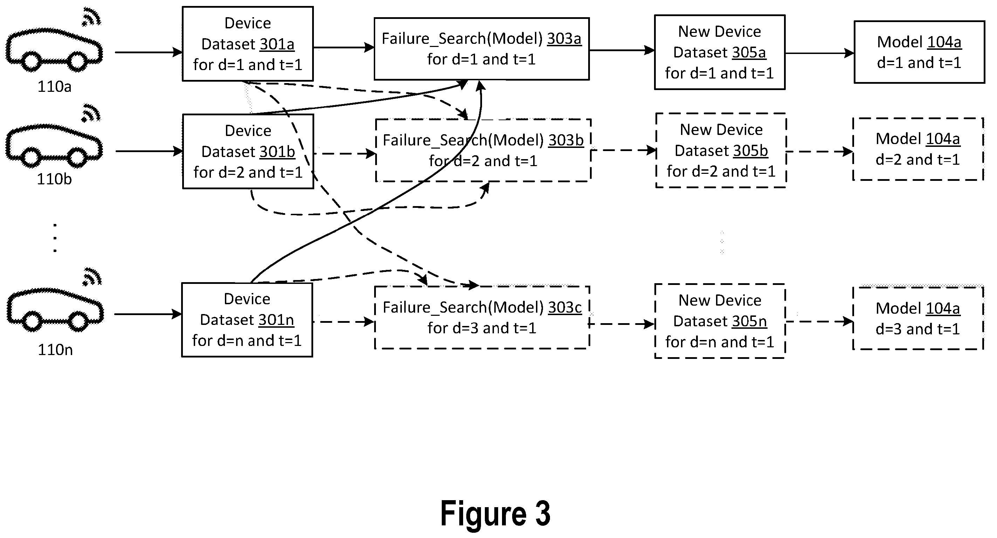

Figure 3 is a schematic diagram illustrating an example embodiment of a failure search operation of a method in accordance with some embodiments of the present disclosure. In the example embodiment of Figure 3, a failure search model 303 is responsible for exploring observations related to failure situations. The failure search operation supports robustness of the ML model. Observations (device dataset 301a, 301b, 301n) obtained from other mobile devices (110b, 110n) support the search process.

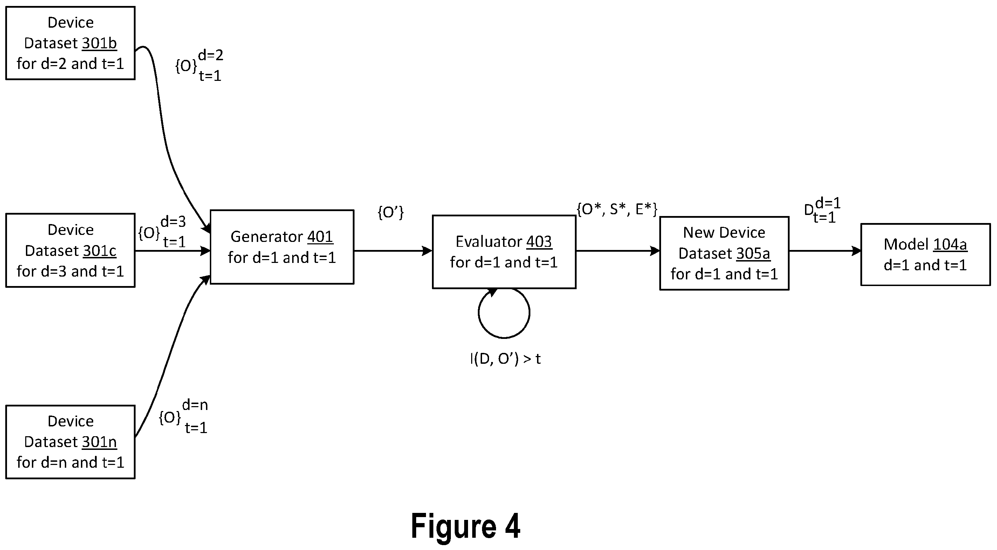

Figure 4 is a schematic diagram illustrating another example embodiment of a failure search operation of a method in accordance with some embodiments of the present disclosure. The failure search operation is performed through a distributed AE. The method includes failure search operations performed by a generator module 401 and an evaluator module 403 to explore unforeseen unsafe conditions, before performing actual ML model 104a training. Observations 301 obtained from other mobile devices 301b, 301c, 301n are used as input to generator module 401. Generator module 401 obtains relevant starting points for failure exploration. Evaluator module 403 performs exploration of unforeseen failures, verifies novelty of a failure and generates a final training sample.

Referring to Figures 3 and 4, generator module 401 obtains starting points P that may be used during failure exploration. Evaluator module 403 explores relevant unforeseen observations from starting points $P$ to be added in a trained dataset $D_d$ of the mobile device $d$. The failure search operations of an example method of the present disclosure may include the following nine operations:

1. The generator module 401 obtains the dataset $\delta = \{o | o \in \{O_n\}, n \neq d\}$, which contains observations made by mobile devices different from mobile device d. These observations are extracted from the training dataset produced by each mobile device 110. Once $\delta$ is obtained, it can be stored in a central server and cumulatively updated.

2. For each observation $O \in \delta$, a safety level $S_d(O)$ is calculated, where $S_d(\cdot)$ is a function to calculate the safety level associated to mobile device d, given an observation $O$. After performing this operation on $\delta$, a new set $P = \{p_i\}_{i=1}^{M}$, $p_i = \{O_i, S_i\}$ is generated, where $M$ is the number of observations in $\delta$.

3. For each pair $p = \{O,S\} \in P$, a weight $w = \frac{1}{S}$ is calculated, which is proportionally inverse to the safety level value. All weights are normalized in a way that $\sum_{i=1}^{M} w_i = 1$. After this process, obtained weights are appended in $p$, which results in $p = \{O, S, w\}$. These weights inform the importance level of each triple $p$.

4. Relevant starting points are chosen through importance sampling. $Q$ triples $p$ are sampled without replacement, with probability proportional to w (in other words, samples associated to a lower safety level have a higher probability to be selected). The selected tuples will form a new set $P' = \{p'_i\}_{i=1}^{Q}$. The resulting set $P'$ is ready to be used as starting point.

5. Evaluator module 403 obtains the set $P'$ and for each observation $O \in p'$, it is explored for highly unsafe situations in the observation domain. The exploration searches for an observation $O'$ that minimizes $S_d(\cdot)$, given $O$ as starting point. In other words, $O' = arg \min_{O} S_d(O)$. For that, different optimization strategies can be used, such as gradient descent.

6. Continuing the exploration, the amount of novel information that each new observation brings to the original dataset $D_d$ is calculated using mutual information. Observations that introduce novelty include are those observations that reduce uncertainty about the environment. This may be accomplished by calculating the mutual information between the observation $O'$ and dataset $D$, which is formulated as:

$$I(D, O') = H(D) - H(D|O'),$$

where $I(\cdot)$ is the mutual information and $H(\cdot)$ is the entropy. The set of observations $\{O^*\}$ that have a mutual information lower than threshold $t$ are selected: $\{O^*\} = \{o \in \{O'\}|I(D, o) < t < I(D, O')\}$. Observations that do not satisfy this condition are discarded and new ones are obtained from operation 5.

7. After the exploration, new safety level values are obtained by computing $S_d(O^*)$, which results in the pair $\{O^*_i, S^*_i\}_{i=1}^{Q}$.

8. The new pair $\{O^*, S^*\}$ is then applied in the function $h(O^*, S^*)$ to calculate the corresponding network requirement $E^*$. The function $h(\cdot)$ is an approximation of the model $f(\cdot)$, therefore $h(\cdot) \approx f(\cdot)$. However, the computation time of $h(\cdot)$ is much higher than $f(\cdot)$. In general terms, the $h(\cdot)$ can be represented by an accurate simulation of the critical scenario. After this operation, the new set $P^* = \{O^*_i, S^*_i, E^*_i\}_{i=1}^{Q}$ is obtained.

9. The new set $P^*$ is added in the dataset $D_n$, which is used to train the model $f(\cdot)$. The model can be trained using different methods that incorporate temporal information, such as long-shot term memory and recurrent neural network.

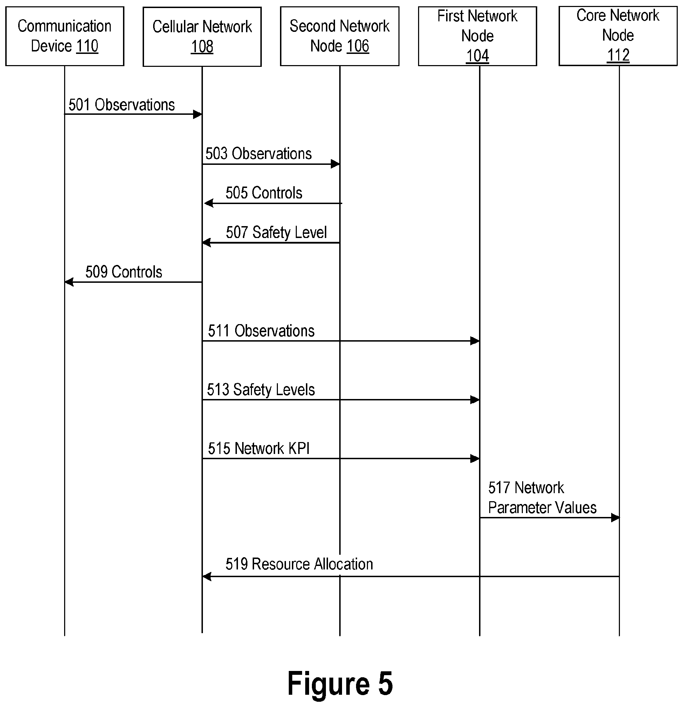

Figure 5 is a schematic illustrating an example embodiment of a method in accordance with various embodiments of the present disclosure. In operation 501, communication device 110 signals observations (e.g., sensor measurements) to cellular network 108 (e.g., a gNodeB). Cellular network 108 forwards the observations to a second network node 106 (e.g., a critical application node in a cloud/edge network). Based on the observations, second network node 106 determines controls and a safety level. In operations 505 and 507, second network node 106 signals the controls and safety level to cellular network 108.

Still referring to Figure 5, in operations 511-515, cellular network 108 signals historic observations and historic safety levels of communications devices 110 and network KPIs to first network node 104 (e.g., in a cloud/edge network). A ML model communicatively connected to first network node 104 determines a value for a network parameter(s) (e.g., maximum latency) given the historic value of the safety level(s) and observation(s). In operation 517, first network node 104 signals the network parameter(s) value(s) to core network node 112. Based on the determined network parameter(s) value(s), in operation 519, core network node 112 allocates/reallocates network resources to cellular network 108 by provisioning a network topology or a network slice that fulfils the network parameter(s).

Example embodiments of methods of the present disclosure in example critical application use case scenarios are now discussed.

A first example embodiment concerns an intelligent transportation system. Autonomous vehicles rely on complex algorithms to navigate safely. Advances in V2X and V2N technology make it possible to offload these algorithms to cloud infrastructures. As a consequence, a combination of information from other autonomous vehicles and usage of high-resolution maps of the environment may be combined.

When using cellular networks to exchange data between cloud infrastructure and autonomous vehicles, the 3GPP TS 22.185 V16.0.0 communication requirement must be followed. 3GPP TS 22.185 V16.0.0 requires a maximum end-to-end latency of 3 ms and a minimum message transmission rate of 100 Hz. However, in an example embodiment, there may be a period of the day with less cars and pedestrians around, which would permit slower reactions. In this example embodiment, the network parameter(s) can be relaxed through a first network node 104 (e.g., a MIC4Safe node in the cloud) to determine the allocation of an appropriate amount of network resources.

A second set of example embodiments concern smart manufacturing. In a factory environment, hundreds of different Industry 4.0 applications for different purposes can overlap on the same site. Each requires connectivity, with different network parameters in terms of throughput, latency, reliability and the number of endpoints. Individual use cases by themselves are unlikely to provide a business case justification for establishing the network but the combination of all applications may. This may require a wireless network that covers the full site, provides a highest level of reliability and low latency, as well as the peak bandwidth for all applications - all with different tailored network slices for different uses.

Robots that perform collaborative tasks must react timely and accordingly to avoid causing injuries to humans. As these robots usually have limited processing capacity, most of the tasks may be processed on the edge.

Industries that rely on 5G communication must follow the 3GPP TS 22.104 V16.5.0, Service requirements for cyber-physical control applications in vertical domains, for robot applications. 3GPP TS 22.104 V16.5.0 requires a maximum end-to-end latency of 1 ms for precise cooperative robotic motion control. However, depending on how a human is collaborating, such a low latency may not be required. For instance, if the robot is not too close to the human, slower reactions may be allowed. Therefore, in some embodiments, a latency network requirement can be dynamically adjusted through ML model 104a (e.g., MIC4Safe) according to the current robot's sensor measurements and safety levels.

There are applications where robots operate part of the day without being co-located with humans and in that case, network parameters imposed by safety assurance with respect to human interaction can be relaxed. Also, there are different human profiles that can be associated to different risk levels, e.g., if the human is wearing personal protection equipment, if it is trained or not, etc. ML model 104a (e.g., MIC4Safe) can learn from the data collected by the robots and the network, and can provide the network parameter values that are enough to keep the communication-based safety critical application running. Core network node 112 can then allocate/reallocate the network resources according to those new values.

As a consequence, in an example embodiment, network resources from a network slice running such a critical application can be temporarily released to other slices that may or may not be running safety critical application and the overall network resources may be optimized.

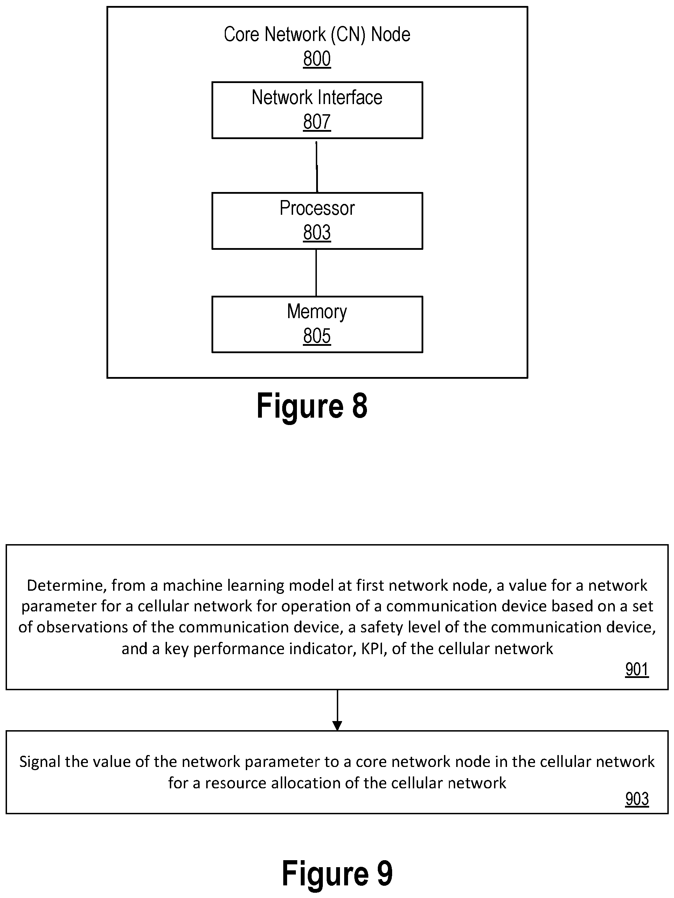

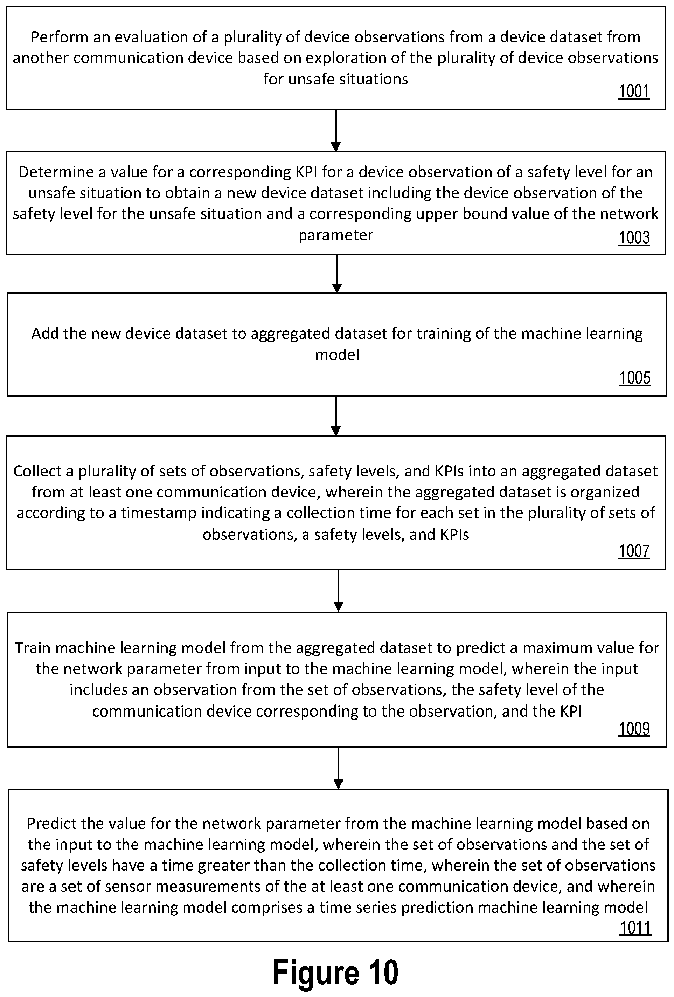

Now that the operations of the various components have been described, operations specific to a first network node 104 of a communication network (implemented using the structure of the block diagram of Figure 2) will now be discussed with reference to the flow charts of Figures 9 and 10 according to various embodiments of the present disclosure. As shown, first network node 104 may include network interface circuitry 205 (also referred to as a network interface) configured to provide communications with other nodes of the communication network and/or the cellular network. First network node 104 may also include a processing circuitry 201 (also referred to as a processor) coupled to the network interface circuitry, and memory circuitry 203 (also referred to as memory) coupled to the processing circuitry 201. The memory circuitry 203 may include computer readable program code that when executed by the processing circuitry 201 causes the processing circuitry 201 to perform operations. Further, modules may be stored in memory 203, and these modules may provide instructions so that when the instructions of a module are executed by respective computer processing circuitry of ML model 209, processing circuitry of ML model 209 performs respective operations of the flow chart of Figure 9 according to embodiments disclosed herein.

As discussed herein, operations of the first network node 104 may be performed by ML model 209 and/or network interface circuitry 205. For example, ML model 209 and/or processor 201 may control network interface circuitry 205 to transmit communications through network interface circuitry 205 to one or more other network nodes of the communication network and/or the cellular network, and/or to receive communications through network interface circuitry from one or more other network nodes. Each of the operations described in Figure 9 can be combined and/or omitted in any combination with each other, and it is contemplated that all such combinations fall within the spirit and scope of this disclosure.

Referring first to Figure 9, a method performed by a first network node (e.g., 104) in a communication network is provided. The method includes determining (901), from a ML model at the first network node, a value for a network parameter for a cellular network for operation of a communication device based on a set of observations of the communication device, a safety level of the communication device, and a key performance indicator, KPI, of the cellular network. The method further includes signaling (903) the value of the network parameter to a core network node in the cellular network for a resource allocation of the cellular network.

In some embodiments, the safety level includes a state of the communication device and is calculated from the set of observations of the communication device. The safety level has a value in a range of values between a minimum safety level value and a maximum safety level value.

Referring now to Figure 10, in some embodiments, the method further includes collecting (1007) a plurality of sets of observations, safety levels, and KPIs into an aggregated dataset from at least one communication device. The aggregated dataset is organized according to a timestamp indicating a collection time for each set in the plurality of sets of observations, a safety levels, and KPIs. The method further includes training (1009) the ML model from the aggregated dataset to predict a maximum value for the network parameter from input to the ML model. The input includes an observation from the set of observations, the safety level of the communication device corresponding to the observation, and the KPI. The method further includes predicting (1011) the value for the network parameter from the ML model based on input to the machine learning model. The set of observations and the set of safety levels having a time greater than the collection time. The set of observations are a set of sensor measurements of the at least one communication device. The ML model includes a time series prediction machine learning model.

In some embodiments, the ML model includes a plurality of device ML models with each device ML model in the plurality of ML models corresponding to a communication device in the at least one communication device.

Referring to Figure 10, in some embodiments, the method further includes performing (1001) an evaluation of a plurality of device observations from a device dataset from another communication device based on exploration of the plurality of device observations for unsafe situations. The method further includes determining (1003) a value for a corresponding KPI for a device observation of a safety level for an unsafe situation to obtain a new device dataset comprising the device observation of the safety level for the unsafe situation and a corresponding upper bound of the network parameter. The method further includes adding (1005) the new device dataset to the aggregated dataset for training of the machine learning model.

In some embodiments, the evaluation is performed at a set of starting points determined from the device dataset. The device dataset includes a plurality of data pairs including a device observation and a calculated device safety level for the device observation. The set of starting points are selected by (1) appending a weight value that is proportionally inverse to the safety level for the unsafe situation to each data pair in the device dataset to result in a plurality of data triples including the device observation, a calculated device safety level, and the weight, and (2) selecting the set of starting points from the data triples by importance sampling the data samples to result in a subset of the data triples for use as the set of starting points.

In some embodiments, the evaluation includes (1) exploration of the subset of the data triples to identify each device observation corresponding to a respective device safety level, (2) calculating mutual information between each device observation corresponding to a respective device safety level and the aggregated dataset to identify the device observations having a mutual information lower than a threshold value, (3) computing the device safety level for each of the device observations having a mutual information lower than a threshold value, and (4) calculating the value for the corresponding KPI in the new device dataset.

Various operations from the flow chart of Figure 10 may be optional with respect to some embodiments of a method performed by a first network node. For example, operations of blocks 1001-1011 of Figure 10 may be optional.

Figure 8 is a block diagram of a core network CN node (e.g., an SMF node, an AMF node, etc.) of a communication network configured to provide cellular communication according in accordance with various embodiments of the present disclosure. As shown, the CN node may include network interface circuitry 807 (also referred to as a network interface) configured to provide communications with other nodes of the core network and/or the communication network. The CN node may also include a processing circuitry 803 (also referred to as a processor) coupled to the network interface circuitry, and memory circuitry 805 (also referred to as memory) coupled to the processing circuitry. The memory circuitry 805 may include computer readable program code that when executed by the processing circuitry 803 causes the processing circuitry to perform operations according to embodiments disclosed herein. According to other embodiments, processing circuitry 803 may be defined to include memory so that a separate memory circuitry is not required.

As discussed herein, operations of the CN node may be performed by processing circuitry 803 and/or network interface circuitry 807. For example, processing circuitry 803 may control network interface circuitry 807 to transmit communications through network interface circuitry 807 to one or more other network nodes and/or to receive communications through network interface circuitry from one or more other network nodes. Moreover, modules may be stored in memory 805, and these modules may provide instructions so that when instructions of a module are executed by processing circuitry 803, processing circuitry 803 performs respective operations (e.g., operations discussed below with respect to example embodiments relating to core network nodes).

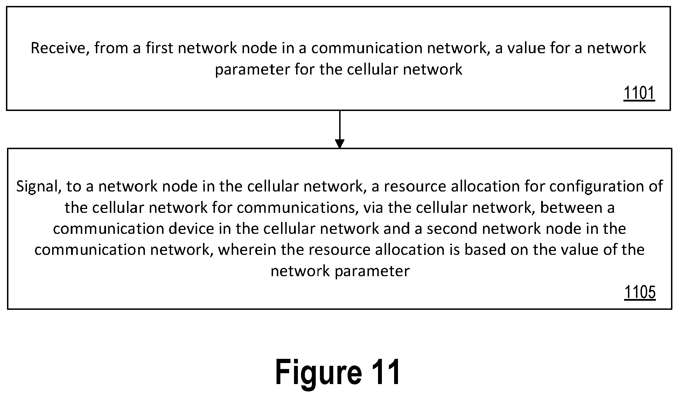

Operations of a core network CN node 112 (implemented using the structure of Figure 8) will now be discussed with reference to the flow chart of Figure 11 according to some embodiments of the present disclosure. For example, modules may be stored in memory 805 of Figure 8, and these modules may provide instructions so that when the instructions of a module are executed by respective CN node processing circuitry 803, processing circuitry 803 performs respective operations of the flow chart.

Referring to Figure 11, a method performed by a core network node (e.g., 112, 800) in a cellular network is provided. The method includes receiving (1101), from a first network node in a communication network, a value for a network parameter for the cellular network. The method further includes signaling (1103), to a network node in the cellular network, a resource allocation for configuration of the cellular network for communications, via the cellular network, between a communication device in the cellular network and a second network node in the communication network. The resource allocation is based on the value of the network parameter.

In some embodiments, the resource allocation can be applied in the cellular network via at least one of provisioning of a cellular network topology and a network slice.

In some embodiments, the resource allocation for configuration of the cellular network is triggered by a predefined rule.

Although the subject matter described herein may be implemented in any appropriate type of system using any suitable components, the embodiments disclosed herein are described in relation to a cellular network in communication with a cloud and/or edge network, such as the example communication network illustrated in Figure 1. For simplicity, the communication network of Figure 1 only depicts cloud/edge network 102 including first network node 104 and critical application node 106, and a cellular network including base station 108, communication device 110, and core network node 112. In practice, a the communication network may further include any additional elements suitable to support communication between wireless devices or between a wireless device and another communication device, such as a landline telephone, a service provider, or any other network node or end device in a cellular network and/or a cloud/edge network. Of the illustrated components, first network node 104, base station 108 (also referred to herein as a network node), communication device 110, and core network node 112 are depicted with additional detail in Figures 2, 7, 6, and 8, respectively.

As used herein, network node (e.g., network node 108, 700) refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the cellular network. Examples of network nodes include, but are not limited to, ), base stations (BSs) (e.g., radio base stations, Node Bs, evolved Node Bs (eNBs) and NR NodeBs (gNBs)), access points (APs) (e.g., radio access points), etc. Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

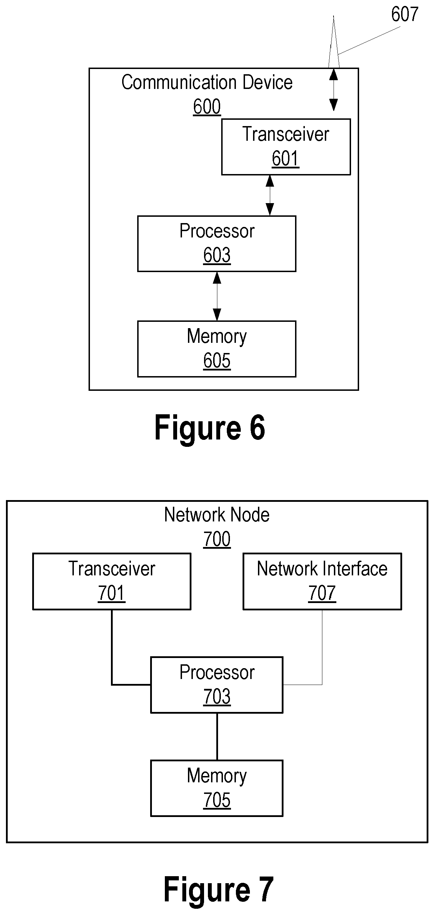

In Figure 7, network node 700 includes processing circuitry 703, device readable medium 705 (also referred to herein as memory), network interface 707, and transceiver 701. Although network node 108 illustrated in the example communication network of Figure 1 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 700 are depicted as single boxes located within a larger box, or nested within multiple boxes, in practice, a network node may comprise multiple different physical components that make up a single illustrated component (e.g., device readable medium 4180 may comprise multiple separate hard drives as well as multiple RAM modules).

Similarly, network node 700 may be composed of multiple physically separate components (e.g., a NodeB component and a RNC component, or a BTS component and a BSC component, etc.), which may each have their own respective components. In certain scenarios in which network node 700 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 700 may be configured to support multiple radio access technologies (RATs). In such embodiments, some components may be duplicated (e.g., separate device readable medium for the different RATs) and some components may be reused (e.g., the same antenna may be shared by the RATs). Network node 700 may also include multiple sets of the various illustrated components for different wireless technologies integrated into network node 700, such as, for example, GSM, WCDMA, LTE, NR, WiFi, or Bluetooth wireless technologies. These wireless technologies may be integrated into the same or different chip or set of chips and other components within network node 700.

As used herein, communication device or mobile device refers to a device capable, configured, arranged and/or operable to communicate wirelessly with network nodes and/or other wireless devices. Unless otherwise noted, the terms UE or mobile device may be used interchangeably herein with communication device, user equipment, user device, and/or wireless device (WD). Communicating wirelessly may involve transmitting and/or receiving wireless signals using electromagnetic waves, radio waves, infrared waves, and/or other types of signals suitable for conveying information through air. In some embodiments, a communication device may be configured to transmit and/or receive information without direct human interaction. For instance, a communication device may be designed to transmit information to a network on a predetermined schedule, when triggered by an internal or external event, or in response to requests from the network. Examples of a communication device include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A communication device may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a communication device may represent a machine or other device that performs monitoring and/or measurements, and transmits the results of such monitoring and/or measurements to another communication device and/or a network node. The communication device may in this case be a machine-to-machine (M2M) device, which may in a 3GPP context be referred to as an MTC device. As one particular example, the communication device may be a communication device implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a communication device may represent a vehicle or other equipment that is capable of monitoring and/or reporting on its operational status or other functions associated with its operation. A communication device as described above may represent the endpoint of a wireless connection, in which case the device may be referred to as a wireless terminal. Furthermore, a communication device as described above may be mobile, in which case it may also be referred to as a mobile device or a mobile terminal.

As illustrated, communication device 110, 600 includes antenna 607, transceiver 601, processing circuitry 603, and device readable medium 605 (also referred to as memory). Communication device 600 may include multiple sets of one or more of the illustrated components for different wireless technologies supported by communication device 600, such as, for example, GSM, WCDMA, LTE, NR, WiFi, WiMAX, or Bluetooth wireless technologies, just to mention a few. These wireless technologies may be integrated into the same or different chips or set of chips as other components within communication device 600.

In the above description of various embodiments of the present disclosure, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus, a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Explanations are provided below for various abbreviations/acronyms used in the present disclosure.

| Abbreviation | Explanation |
| --- | --- |
| AI | Artificial Intelligence |
| AV | Autonomous Vehicle |
| E2E | End-to-End |
| eNB | eNodeB |
| gNB | gNodeB |
| MIC4SAFE | Machine Intelligence on Communication for Safety |
| ML | Machine Learning |
| V2N | Vehicle-to-Network |
| V2X | Vehicle-to-Everything |

References are identified below.

1. ISO/TS 15066:2016. Robots and robotic devices - Collaborative robots
2. ISO/PAS 21448:2019. Road vehicles - Safety of the intended functionality
3. Chen, Wuhui, et al. "A Study of Robotic Cooperation in Cloud Robotics: Architecture and Challenges". IEEE Access, vol. 6, 2018, p. 36662-82. IEEE Xplore, doi:10.1109/ACCESS.2018.2852295
4. ETSI TS 122 186 V15.3.0 (2018-07). Service requirements for enhanced V2X scenarios
5. 3GPP TS 22.104 V16.5.0. Service requirements for cyber-physical control applications in vertical domains
6. Uesato, Jonathan, et al. "Rigorous Agent Evaluation: An Adversarial Approach to Uncover Catastrophic Failures". arXiv:1812.01647 [cs, stat], December, 2018. arXiv.org, http://arxiv.org/abs/1812.01647

## Claims

1. A computer-implemented method performed by a first network node (104) in a communication network (102), the method comprising:

   determining (901), from a machine learning model at the first network node, a value for a network parameter for a cellular network for operation of a communication device (110) based on a set of observations of the communication device, a safety level of the communication device, and a key performance indicator, KPI, of the cellular network; and
signaling (903) the value of the network parameter to a core network node (112, 800) in the cellular network for a resource allocation of the cellular network.

2. The method of Claim 1, wherein the safety level comprises a state of the communication device and is calculated from the set of observations of the communication device, and wherein the safety level has a value in a range of values between a minimum safety level value and a maximum safety level value.

3. The method of any of Claims 1 to 2, further comprising:

collecting (1007) a plurality of sets of observations, safety levels, and KPIs into an aggregated dataset from at least one communication device, wherein the aggregated dataset is organized according to a timestamp indicating a collection time for each set in the plurality of sets of observations, a safety levels, and KPIs;
training (1009) the machine learning model from the aggregated dataset to predict a maximum value for the network parameter from input to the machine learning model, wherein the input comprises an observation from the set of observations, the safety level of the communication device corresponding to the observation, and the KPI; and
predicting (1011) the value for the network parameter from the machine learning model based on the input to the machine learning model, wherein the set of observations and the set of safety levels having a time greater than the collection time, wherein the set of observations are a set of sensor measurements of the at least one communication device, and wherein the machine learning model comprises a time series prediction machine learning model.

4. The method of Claim 3, wherein the machine learning model comprises a plurality of device machine learning models with each device machine learning model in the plurality of machine learning models corresponding to a communication device in the at least one communication device.

5. The method of any of Claims 3 to 4, further comprising:

performing (1001) an evaluation of a plurality of device observations from a device dataset from another communication device based on exploration of the plurality of device observations for unsafe situations;
determining (1003) a value for a corresponding KPI for a device observation of a safety level for an unsafe situation to obtain a new device dataset comprising the device observation of the safety level for the unsafe situation and a corresponding upper bound value of the network parameter; and
adding (1005) the new device dataset to the aggregated dataset for training of the machine learning model.

6. The method of Claim 5, wherein the evaluation is performed at a set of starting points determined from the device dataset,

wherein the device dataset comprises a plurality of data pairs including a device observation and a calculated device safety level for the device observation, and
wherein the set of starting points are selected by (1) appending a weight value that is proportionally inverse to the safety level for the unsafe situation to each data pair in the device dataset to result in a plurality of data triples including the device observation, a calculated device safety level, and the weight, and (2) selecting the set of starting points from the data triples by importance sampling the data samples to result in a subset of the data triples for use as the set of starting points.

7. The method of any of Claims 5 to 6, wherein the evaluation comprises (1) exploration of the subset of the data triples to identify each device observation corresponding to a respective device safety level, (2) calculating mutual information between each device observation corresponding to a respective device safety level and the aggregated dataset to identify the device observations having a mutual information lower than a threshold value, (3) computing the device safety level for each of the device observations having a mutual information lower than a threshold value, and (4) calculating the value for the corresponding KPI in the new device dataset.

8. A first network node (104) adapted to perform operations comprising:

determine, from a machine learning model at the first network node, a value for a network parameter for a cellular network for operation of a communication device based on a set of observations of the communication device, a safety level of the communication device, and a key performance indicator, KPI, of the cellular network; and signal the value for the network parameter to a core network node (112, 800) in the cellular network for a resource allocation of the cellular network.

9. The network node of Claim 8 adapted to perform operations according to Claims 2 to 7.

**Patentansprüche**

1. Computerimplementiertes Verfahren, das von einem ersten Netzwerkknoten (104) in einem Kommunikationsnetz (102) durchgeführt wird, wobei das Verfahren umfasst:

Bestimmen (901) eines Werts für einen Netzwerkparameter für ein Mobilfunknetz für einen Betrieb einer Kommunikationsvorrichtung (110) anhand eines Modells für maschinelles Lernen auf der Grundlage eines Satzes von Beobachtungen der Kommunikationsvorrichtung, eines Sicherheitsniveaus der Kommunikationsvorrichtung und einer Leistungskennzahl, KPI, des Mobilfunknetzes; und
Signalisieren (903) des Wertes des Netzwerkparameters an einen Kernnetzwerkknoten (112, 800) im Mobilfunk-knetz für eine Ressourcenzuordnung des Mobilfunknetzes.

2. Verfahren nach Anspruch 1, wobei das Sicherheitsniveau einen Zustand der Kommunikationsvorrichtung umfasst und anhand des Satzes von Beobachtungen der Kommunikationsvorrichtung berechnet wird, und wobei das Sicherheitsniveau einen Wert in einem Bereich von Werten zwischen einem minimalen Sicherheitsniveau und einem maximalen Sicherheitsniveau aufweist.

3. Verfahren nach einem der Ansprüche 1 bis 2, ferner umfassend:

Sammeln (1007) einer Mehrzahl von Sätzen von Beobachtungen, Sicherheitsniveaus und KPIs in einem aggregierten Datensatz von mindestens einer Kommunikationsvorrichtung, wobei der aggregierte Datensatz entsprechend einem Zeitstempel organisiert wird, der eine Sammelzeit für jeden Satz der Mehrzahl von Sätzen von Beobachtungen, Sicherheitsniveaus und KPIs angibt;
Trainieren (1009) des Modells für maschinelles Lernen anhand des aggregierten Datensatzes, um einen Maximalwert für den Netzwerkparameter aus einer Eingabe in das Modell für maschinelles Lernen vorherzusagen, wobei die Eingabe eine Beobachtung aus dem Satz von Beobachtungen, das Sicherheitsniveau der Kommunikationsvorrichtung, das der Beobachtung entspricht, und die KPI umfasst; und
Vorhersagen (1011) des Wertes für den Netzwerkparameter anhand des Modells für maschinelles Lernen auf der Grundlage der Eingabe in das Modell für maschinelles Lernen, wobei der Satz von Beobachtungen und der Satz von Sicherheitsniveaus eine Zeit aufweisen, die größer als die Sammelzeit ist, wobei der Satz von Beobachtungen ein Satz von Sensormessungen der mindestens einen Kommunikationsvorrichtung ist, und wobei das Modell für maschinelles Lernen ein Zeitreihen-Vorhersagemodell für maschinelles Lernen umfasst;

4. Verfahren nach Anspruch 3, wobei das Modell für maschinelles Lernen eine Mehrzahl von Vorrichtungs-Modellen für maschinelles Lernen umfasst, wobei jedes Vorrichtungs-Modell für maschinelles Lernen in der Mehrzahl von Modellen für maschinelles Lernen einer Kommunikationsvorrichtung in der mindestens einen Kommunikationsvorrichtung entspricht.

5. Verfahren nach einem der Ansprüche 3 bis 4, ferner umfassend:

Durchführen (1001) einer Auswertung einer Mehrzahl von Vorrichtungsbeobachtungen aus einem Vorrichtungsdatensatz einer anderen Kommunikationsvorrichtung auf der Grundlage einer Untersuchung der Mehrzahl von Vorrichtungsbeobachtungen auf unsichere Situationen;
Bestimmen (1003) eines Wertes für eine entsprechende KPI für eine Vorrichtungsbeobachtung eines Sicherheitsniveaus für eine unsichere Situation, um einen neuen Vorrichtungsdatensatz zu erhalten, der die Vorrichtungsbeobachtung des Sicherheitsniveaus für die unsichere Situation und einen entsprechenden oberen Grenzwert des Netzwerkparameters umfasst; und
Hinzufügen (1005) des neuen Vorrichtungsdatensatzes zu dem aggregierten Datensatz zum Trainieren des Modells für maschinelles Lernen.

6. Verfahren nach Anspruch 5, wobei die Auswertung an einem Satz von Ausgangspunkten durchgeführt wird, die anhand des Vorrichtungsdatensatzes bestimmt werden,

wobei der Vorrichtungsdatensatz eine Mehrzahl von Datenpaaren umfasst, die jeweils eine Vorrichtungsbeobachtung und ein berechnetes Sicherheitsniveau der Vorrichtung für die Vorrichtungsbeobachtung beinhalten, und

wobei der Satz von Ausgangspunkten durch (1) Anhängen eines Gewichtswertes, der proportional umgekehrt zum Sicherheitsniveau für die unsichere Situation ist, an jedes Datenpaar im Vorrichtungsdatensatz, um eine Mehrzahl von Daten-Triples zu erhalten, die die Vorrichtungsbeobachtung, ein berechnetes Sicherheitsniveau der Vorrichtung und das Gewicht beinhalten, und (2) Auswählen des Satzes von Ausgangspunkten aus den Daten-Triples durch Importance Sampling der Datenbeispiele, um eine Teilmenge der Daten-Triples zu erhalten, die als Satz von Ausgangspunkten verwendet werden, ausgewählt wird.

7. Verfahren nach einem der Ansprüche 5 bis 6, wobei die Auswertung (1) das Untersuchen der Teilmenge der Daten-Tripel, um jede Vorrichtungsbeobachtung zu identifizieren, die einem jeweiligen Sicherheitsniveau der Vorrichtung entspricht, (2) das Berechnen von gegenseitiger Information zwischen jeder Vorrichtungsbeobachtung, die einem jeweiligen Sicherheitsniveau der Vorrichtung entspricht, und dem aggregierten Datensatz, um die Vorrichtungsbeobachtungen zu identifizieren, deren gegenseitige Information unter einem Schwellenwert liegt, (3) das Berechnen des Sicherheitsniveaus der Vorrichtung für jede der Vorrichtungsbeobachtungen, deren gegenseitige Information unter einem Schwellenwert liegt, und (4) das Berechnen des Wertes für die entsprechende KPI im neuen Vorrichtungsdatensatz umfasst.

8. Erster Netzwerkknoten (104), der dazu ausgelegt ist, Operationen durchzuführen, umfassend:

Bestimmen eines Werts für einen Netzwerkparameter für ein Mobilfunknetz
für einen Betrieb einer Kommunikationsvorrichtung
anhand eines Modells für maschinelles Lernen am ersten Netzwerkknoten auf der Grundlage eines Satzes von Beobachtungen der Kommunikationsvorrichtung, eines Sicherheitsniveaus der Kommunikationsvorrichtung und einer Leistungskennzahl, KPI, des Mobilfunknetzes; und
Signalisieren des Wertes für den Netzwerkparameter an einen Kernnetzwerkknoten (112, 800) im Mobilfunknetz für eine Ressourcenzuordnung des Mobilfunknetzes.

9. Netzwerkknoten nach Anspruch 8, der dazu ausgelegt ist, Operationen nach einem der Ansprüche 2 bis 7 durchzuführen.

**Revendications**

1. Procédé mis en œuvre par ordinateur réalisé par un premier nœud de réseau (104) dans un réseau de communication (102), le procédé comprenant :

la détermination (901), à partir d'un modèle d'apprentissage automatique au niveau du premier nœud de réseau, d'une valeur pour un paramètre de réseau pour un réseau cellulaire pour le fonctionnement d'un dispositif de communication (110) sur la base d'un ensemble d'observations du dispositif de communication, d'un niveau de sécurité du dispositif de communication, et d'un indicateur de performance clé, KPI, du réseau cellulaire ; et
la signalisation (903) de la valeur du paramètre de réseau à un nœud de réseau central (112, 800) dans le réseau cellulaire pour une allocation de ressources du réseau cellulaire.

2. Procédé selon la revendication 1, dans lequel le niveau de sécurité comprend un état du dispositif de communication et est calculé à partir de l'ensemble d'observations du dispositif de communication, et dans lequel le niveau de sécurité a une valeur dans une plage de valeurs comprise entre une valeur de niveau de sécurité minimale et une valeur de niveau de sécurité maximale.

3. Procédé selon l'une quelconque des revendications 1 à 2, comprenant en outre :

la collecte (1007) d'une pluralité d'ensembles d'observations, de niveaux de sécurité et de KPI dans un ensemble de données agrégées provenant d'au moins un dispositif de communication, dans lequel l'ensemble de données agrégées est organisé selon une horodate indiquant un temps de collecte pour chaque ensemble dans la pluralité d'ensembles d'observations, de niveaux de sécurité et de KPI ;

l'entraînement (1009) du modèle d'apprentissage automatique à partir de l'ensemble de données agrégées pour prédire une valeur maximale pour le paramètre de réseau à partir d'une entrée vers le modèle d'apprentissage automatique, dans lequel l'entrée comprend une observation provenant de l'ensemble d'observations, le niveau de sécurité du dispositif de communication correspondant à l'observation, et le KPI ; et

la prédiction (1011) de la valeur pour le paramètre de réseau à partir du modèle d'apprentissage automatique sur la base de l'entrée vers le modèle d'apprentissage automatique, dans lequel l'ensemble d'observations et l'ensemble de niveaux de sécurité ont un temps supérieur au temps de collecte, dans lequel l'ensemble d'observations est un ensemble de mesures de capteur de l'au moins un dispositif de communication, et dans lequel le modèle d'apprentissage automatique comprend un modèle d'apprentissage automatique de prédiction de séries chronologiques.

4. Procédé selon la revendication 3, dans lequel le modèle d'apprentissage automatique comprend une pluralité de modèles d'apprentissage automatique de dispositif, chaque modèle d'apprentissage automatique de dispositif dans la pluralité de modèles d'apprentissage automatique correspondant à un dispositif de communication dans l'au moins un dispositif de communication.

5. Procédé selon l'une quelconque des revendications 3 à 4, comprenant en outre :

la réalisation (1001) d'une évaluation d'une pluralité d'observations de dispositif provenant d'un ensemble de données de dispositif provenant d'un autre dispositif de communication sur la base d'une exploration de la pluralité d'observations de dispositif pour des situations dangereuses ;
la détermination (1003) d'une valeur pour un KPI correspondant pour une observation de dispositif d'un niveau de sécurité pour une situation dangereuse afin d'obtenir un nouvel ensemble de données de dispositif comprenant l'observation de dispositif du niveau de sécurité pour la situation dangereuse et une valeur de limite supérieure correspondante du paramètre de réseau ; et
l'ajout (1005) du nouvel ensemble de données de dispositif à l'ensemble de données agrégées pour l'entraînement du modèle d'apprentissage automatique.

6. Procédé selon la revendication 5, dans lequel l'évaluation est réalisée au niveau d'un ensemble de points de départ déterminés à partir de l'ensemble de données de dispositif,

dans lequel l'ensemble de données de dispositif comprend une pluralité de paires de données incluant une observation de dispositif et un niveau de sécurité de dispositif calculé pour l'observation de dispositif, et
dans lequel l'ensemble de points de départ est sélectionné par (1) l'ajout d'une valeur de poids qui est proportionnellement inverse au niveau de sécurité pour la situation dangereuse à chaque paire de données dans l'ensemble de données de dispositif pour aboutir à une pluralité de triplets de données incluant l'observation de dispositif, un niveau de sécurité de dispositif calculé, et le poids, et (2) la sélection de l'ensemble de points de départ à partir des triplets de données par un échantillonnage d'importance des échantillons de données pour aboutir à un sous-ensemble des triplets de données pour une utilisation en tant qu'ensemble de points de départ.

7. Procédé selon l'une quelconque des revendications 5 à 6, dans lequel l'évaluation comprend (1) l'exploration du sous-ensemble des triplets de données pour identifier chaque observation de dispositif correspondant à un niveau de sécurité de dispositif respectif, (2) le calcul d'une information mutuelle entre chaque observation de dispositif correspondant à un niveau de sécurité de dispositif respectif et l'ensemble de données agrégées pour identifier les observations de dispositif ayant une information mutuelle inférieure à une valeur seuil, (3) le calcul du niveau de sécurité de dispositif pour chacune des observations de dispositif ayant une information mutuelle inférieure à une valeur seuil, et (4) le calcul de la valeur pour le KPI correspondant dans le nouvel ensemble de données de dispositif.

8. Premier nœud de réseau (104) adapté pour réaliser des opérations comprenant :

la détermination, à partir d'un modèle d'apprentissage automatique au niveau du premier nœud de réseau, d'une valeur pour un paramètre de réseau pour un réseau cellulaire pour le fonctionnement d'un dispositif de communication sur la base d'un ensemble d'observations du dispositif de communication, d'un niveau de sécurité du dispositif de communication, et d'un indicateur de performance clé, KPI, du réseau cellulaire ; et
la signalisation de la valeur pour le paramètre de réseau à un nœud de réseau central (112, 800) dans le réseau cellulaire pour une allocation de ressources du réseau cellulaire.

9. Nœud de réseau selon la revendication 8 adapté pour réaliser des opérations selon les revendications 2 à 7.

Observations 126

((•))

Observations 126

Controls 128

Controls 128

Safety Level 130

Communication
Device
110

Cellular
Network
108

Aggregated
Dataset 114

Resource
Allocation 124

Observations 116
Safety Levels 118
Network KPIs 120

106

102

Network
Parameter Value
122

104

104a

Core Network
Node 112

# Figure 1

First Network Node 104

| Memory 203 | Processor 201 | Network Interface 205 |

116
118
120

| Data Aggregation 207 | Aggregated Dataset 114 | ML Model Learning 209 | Model 104a | Network Parameter Update 211 |

122

# Figure 2

Figure 3

EP 4 252 470 B1

EP 4 252 470 B1

Device Dataset 301b for d=2 and t=1

$\{O\}^{d=2}_{t=1}$

Device Dataset 301c for d=3 and t=1

$\{O\}^{d=3}_{t=1}$

Generator 401 for d=1 and t=1

$\{O'\}$

Evaluator 403 for d=1 and t=1

$\{O^*, S^*, E^*\}$

New Device Dataset 305a for d=1 and t=1

$D^{d=1}_{t=1}$

Model 104a d=1 and t=1

$I(D, O') > t$

Device Dataset 301n for d=n and t=1

$\{O\}^{d=n}_{t=1}$

# Figure 4

Figure 5

Communication Device
600

Transceiver
601

Processor
603

Memory
605

**Figure 6**

Network Node
700

Transceiver
701

Network Interface
707

Processor
703

Memory
705

**Figure 7**

Core Network (CN) Node
800

Network Interface
807

Processor
803

Memory
805

# Figure 8

Determine, from a machine learning model at first network node, a value for a network parameter for a cellular network for operation of a communication device based on a set of observations of the communication device, a safety level of the communication device, and a key performance indicator, KPI, of the cellular network

901

Signal the value of the network parameter to a core network node in the cellular network for a resource allocation of the cellular network

903

# Figure 9

Perform an evaluation of a plurality of device observations from a device dataset from another communication device based on exploration of the plurality of device observations for unsafe situations
1001

Determine a value for a corresponding KPI for a device observation of a safety level for an unsafe situation to obtain a new device dataset including the device observation of the safety level for the unsafe situation and a corresponding upper bound value of the network parameter
1003

Add the new device dataset to aggregated dataset for training of the machine learning model
1005

Collect a plurality of sets of observations, safety levels, and KPIs into an aggregated dataset from at least one communication device, wherein the aggregated dataset is organized according to a timestamp indicating a collection time for each set in the plurality of sets of observations, a safety levels, and KPIs
1007

Train machine learning model from the aggregated dataset to predict a maximum value for the network parameter from input to the machine learning model, wherein the input includes an observation from the set of observations, the safety level of the communication device corresponding to the observation, and the KPI
1009

Predict the value for the network parameter from the machine learning model based on the input to the machine learning model, wherein the set of observations and the set of safety levels have a time greater than the collection time, wherein the set of observations are a set of sensor measurements of the at least one communication device, and wherein the machine learning model comprises a time series prediction machine learning model
1011

# Figure 10

Receive, from a first network node in a communication network, a value for a network parameter for the cellular network

1101

Signal, to a network node in the cellular network, a resource allocation for configuration of the cellular network for communications, via the cellular network, between a communication device in the cellular network and a second network node in the communication network, wherein the resource allocation is based on the value of the network parameter

1105

# Figure 11

**Patent documents cited in the description**

- US 2019053104 A1
- WO 2019158034 A1
- US 2017332282 A1
- WO 2020049181 A1

**Non-patent literature cited in the description**

- A Study of Robotic Cooperation in Cloud Robotics: Architecture and Challenges. **CHEN ; WUHUI et al.** IEEE Access. IEEE Xplore, 2018, vol. 6, 36662-82
- **UESATO ; JONATHAN et al.** Rigorous Agent Evaluation: An Adversarial Approach to Uncover Catastrophic Failures. *arXiv:1812.01647*, December 2018, http://arxiv.org/abs/1812.01647
- **UESATO ; JONATHAN et al.** Rigorous Agent Evaluation: An Adversarial Approach to Uncover Catastrophic Failures''.. *arXiv:1812.01647 [cs, stat]*, December 2018, http://arxiv.org/abs/1812.01647